# EUROPEAN PATENT APPLICATION

(11) **EP 2 575 053 A1**
(43) Date of publication of application: **03.04.2013**
(21) Application number: 11182967.7
(22) Date of filing: 27.09.2011
(51) Int. Cl.: G06F 17/30

(54) **USER-ENHANCED RANKING OF INFORMATION OBJECTS**

(71) Applicant: Alcatel Lucent, 75007 Paris (FR)
(72) Inventor: Hong, Dohy, 91620 NOZAY (FR)
(74) Representative: Loyer & Abello

(57) **Abstract**

A method for user-enhanced ranking of information objects, comprising:
generating a graphical user-interface (40) on a display (13), the graphical user-interface comprising a graph (41), wherein the graph comprises a plurality of icons each representing an information object of the collection of information objects and a plurality of connectors connecting the icons, each connector representing at least one link of the collection of links, modifying the graph by generating an additional connector between the icons in response to graph modification commands received from a user-controlled interaction means,
storing an additional link in the database (21) as a function of the additional connector, wherein the additional link interrelates information objects represented by the icons connected by the additional connector,
computing a link-based rank for an information object of the collection of information objects as a function of the additional link and the collection of links.

## Description

### Field of the invention

The invention relates to the technical field of link-based ranking of information objects, in particular for information retrieval in large computer-based databases such as bibliographic databases, social networks or web sites.

### Background

Link-based rank computation methods are based on the idea of computing a score that represents the relevancy or popularity of a document from the very structure of the database in which the document is stored. PageRank is a well-known link-based rank computation method, the principles of which are disclosed in US-B-6285999. From a programmer's or mathematician's perspective, the PageRank method relies on a model of the linked database as a directed graph of nodes, where each node corresponds to a web page document and where the directed connections between nodes correspond to links from one document to another. However, such underlying modeling of the linked database remains hidden to the end-user.

### Summary

In an embodiment, the invention provides a method for user-enhanced ranking of information objects, comprising:
accessing a computer-based database comprising a collection of information objects interrelated by a collection of directional links,
   generating a graphical user-interface on a display, the graphical user-interface comprising a graph, wherein the graph comprises a plurality of icons each representing an information object of the collection of information objects and a plurality of connectors connecting the icons, each connector representing at least one link of the collection of links,
   modifying the graph by generating an additional connector between the icons in response to graph modification commands received from a user-controlled interaction means,
   storing an additional link in the database as a function of the additional connector, wherein the additional link interrelates information objects represented by the icons connected by the additional connector,
   computing a link-based rank for an information object of the collection of information objects as a function of the additional link and the collection of links.

According to embodiments, such a method can comprise one or more of the features below.

In an embodiment, the database comprises a structure-based layer and a user-generated layer, and the additional link is stored in the user-generated layer. In an embodiment, the method further comprises storing links generated by a plurality of users in the user-generated layer. Such a layer separation makes it possible to process differently links based on the structure of the information objects from links added by the end-users, e.g. to allow sharing of the second in a flexible and configurable manner.

In an embodiment, the method further comprises selecting a subset of the links stored in the user-generated layer, wherein the link-based rank is computed as a function of the selected subset of the links stored in the user-generated layer.

Many options exist with respect to selecting the user-generated links, which should be taken into account in the rank computation. In an embodiment, the subset of the links is selected as a function of one of a vote by the plurality of users, an administrator's decision and a link repetition measurement.

Such a method is applicable to many types of linked databases in which a link-based rank computation can be implemented, especially homogeneous databases or heterogeneous databases. In an embodiment, the structure-based layer stores information objects and links obtained by crawling web sites, such as a search engine index, wherein the information objects stored in the structure-based layer represent documents found on the web sites, wherein the links stored in the structure-based layer represent hypertext links between the documents.

In an embodiment, the structure-based layer stores information objects and links representing a bibliographic index, wherein the information objects comprise documents and authors' profiles, wherein the links comprise:
citation links that link documents with one another and
authorship links that link authors' profiles with documents.

In an embodiment, the additional link comprises a positive link, and the link-based rank computation takes into account the positive link so as to increase the link-based rank of the information object pointed to by the positive link.

In an embodiment, the additional link comprises a negative link, and the link-based rank computation takes into account the negative link so as to decrease the link-based rank of the information object pointed to by the negative link.

In an embodiment, the method further comprises:
receiving a search query, and
retrieving information objects that match the search query from the collection of information objects, wherein the icons of the graph only represent information objects that match the search query.

In an embodiment, the method further comprises:
computing link-based ranks for the information objects that match the search query, wherein the generated graph comprises an icon representing a best-ranked information object in a central portion of the graph.

In an embodiment, the generated graph comprises further icons representing further information objects having a lower rank than the best-ranked information object, and the further icons are disposed around the central portion of the graph.

In an embodiment, the invention also provides a computer program comprising computer-executable instructions that perform the above-mentioned method when executed.

In an embodiment, the invention also provides a computer system for user-enhanced ranking of information objects, comprising:
a computer-based database comprising a collection of information objects interrelated by a collection of directional links,
a display,
a control module adapted to generate a graphical user-interface on the display, the graphical user-interface comprising a graph, wherein the graph comprises a plurality of icons each representing an information object of the collection of information objects and a plurality of connectors connecting the icons, each connector representing at least one link of the collection of links,
a user-controlled interaction means adapted to send graph modification commands to the control module, the control module being adapted to modify the graph by generating an additional connector between the icons in response to the graph modification commands and to store an additional link in the database as a function of the additional connector, wherein the additional link interrelates information objects represented by the icons connected by the additional connector,
and a rank computation module adapted to compute a link-based rank for an information object of the collection of information objects as a function of the additional link and the collection of links.

In an embodiment, the user-controlled interaction means is further adapted to send graph navigation commands to the control module, the control module being adapted to display a different view of the graph in response to the graph navigation commands.

Aspects of the invention are based on the idea of collecting information from one or more end-users of a linked database to complete or refme the information stored in the database, especially information about the relationship between information objects.

Aspects of the invention stem for the observation that showing to the end-user a complete or simplified view of the directed graph on which a rank computation is based will facilitate intuitive interactions of the end-user with the database to enrich the database with additional information that may not be gathered automatically, especially information relating a subjective appreciation of the user. Such additional information may include additional links between stored objects or additional information about the stored links, e.g. about the subjective value thereof.

### Brief description of the drawings

These and other aspects of the invention will be apparent from and elucidated with reference to the embodiments described hereinafter, by way of example, with reference to the drawings.
Figure 1 is a functional representation of a computer environment, in which embodiments of the invention may be implemented.
Figure 2 is a functional representation of a control module deployed in the computer environment of Figure 1.
Figure 3 is a graph representing an excerpt from a bibliographical database.
Figure 4 shows the graph of Figure 3 with appreciative links added by an end-user.
Figure 5 is a layered representation of the graph of Figure 4.
Figure 6 is a graph representing an excerpt from a search engine index corresponding to a search engine response to a query.

### Detailed description of the embodiments

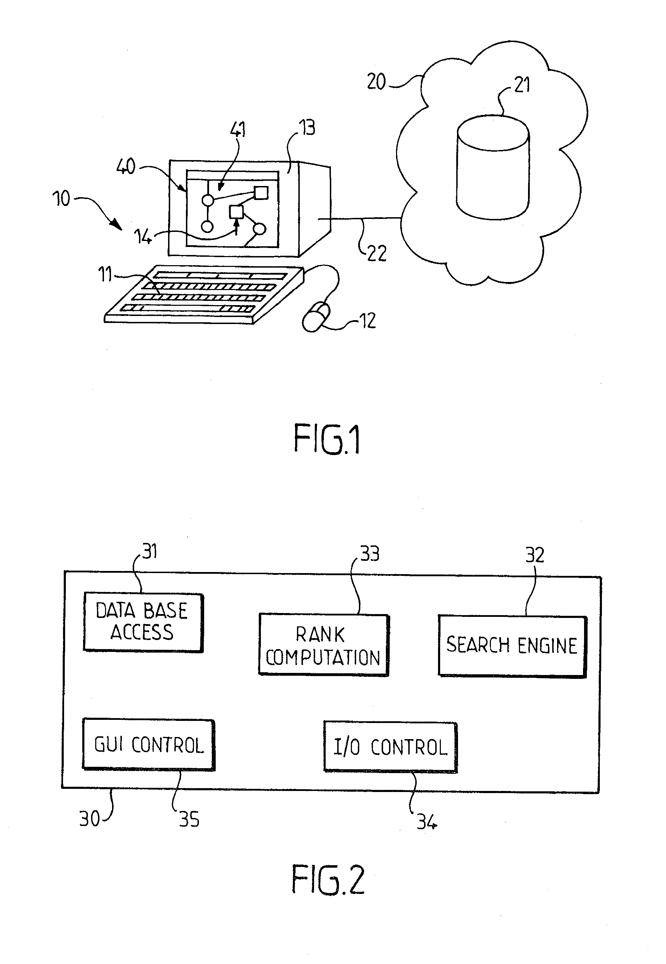

With reference to Figure 1, a computer environment in which embodiments of the invention may be implemented comprises a computer 10 and a computer-based data repository 20 storing a linked database 21. The linked database 21 contains information objects interrelated by links so that a link-based rank computation method can be executed. The data repository 20 may be centralized or distributed in any number of storage units. The data repository 20 may be co-located with the computer 10 or located at a remote location. Accordingly, the data connection 22 between computer 10 and data repository 20 can be a computer bus or a wired or wireless network link, e.g. of a local area network or wide area network. In this respect the presentation of Figure 1 is rather canonical. In an exemplary embodiment, the data repository 20 is the World Wide Web and the interrelated information objects are web page documents.

Computer 10 comprises a control module 30, which is functionally depicted in Figure 2. Control module 30 comprises a database access module 31 to make read and write accesses to the database 21. A search engine module 32 executes search functions in response to a query entered by an end-user to retrieve information objects that match the query from the database 21. A rank computation module 33 serves to compute link-based ranks of some or all of the information objects in the database as a function of directed links through which the information objects interrelate. An Input/output control module 34 serves to interface with input peripherals, e.g. keyboard 11, mouse 12 and pointer 14, touch-screen and the like, to receive user-generated commands. A Graphical User-Interface control module 35 serves to generate a graphical user interface 40 on a computer screen 13 to enable the end-user to visualize and modify a graph 41 derived from the linked database 21.

The graphical user-interface 40 reacts to user-generated commands to execute functions which can be generally sorted into two categories, namely graph navigation and graph modification. Command triggers corresponding to those functions may be implemented in the graphical user-interface 40 in well-known manners, e.g. as fixed drop lists, pointer-located drop lists, clickable buttons and the like.

The graph navigation functions include: scrolling in all directions, zooming in and out, selecting items to be shown, selecting items to be hidden, centering the view on a selected item, and the like. The selectable items may include individual icons (i.e. representing individual objects), classes of icons (e.g. representing objects of a same type), individual connectors (i.e. representing individual links), classes of connectors (e.g. representing links of a same type), graph layers, legends and the like.

The graph modification functions are functions that enable the end-user to interact with the graph 41 to complete or refine not only the graph 41, but also the content of the underlying linked database 21. Therefore, the GUI control module 35 interoperates with the database access module 31 to ensure that, in principle, the graph shown reflects the current state of the database and reciprocally. Such modification functions include one or more of the following:
● adding a connector to the graph for adding a link of a selected link type between two information objects of the database,
● adding a node to the graph for adding an information object of a selected object type to the database,
● attaching a subjective comment to a connector or node, for sharing the comment with other end-users,

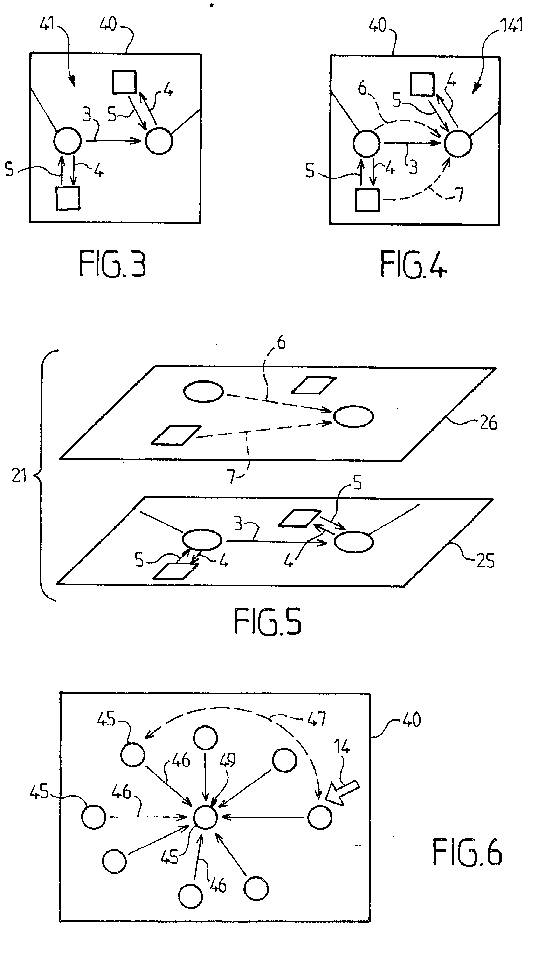

With reference to Figure 6, an example of the graph modification functions will now be described in an embodiment in which the data repository 20 is the World Wide Web, the interrelated information objects are web page documents and the link-based rank computation is PageRank or the like. Figure 6 shows the graph that is displayed on the GUI 40. A circular icon 45 represents a web page document and an arrow 46 represents a hyperlink between web pages or an aggregation of such hyperlinks.

Double-arrow connector 47 represents a bidirectional link added by an end-user with the help of pointer 14 to convey the meaning that two web pages have a similar content. Once connector 47 has been created in the GUI 40, two corresponding directed links are recorded in the database 21 as if there were hyperlinks pointing from each of the two web pages to the other. As a consequence, the rank computation by PageRank will be influenced by the added bidirectional link.

The example above is very simple for the sake of clarity. It may be considered irrelevant to re-compute the ranks of a whole collection of documents in view of single additional link. However it will be appreciated that, in a web implementation, a similar capability may be offered to a large community of users to enrich the content of a search engine index with a large number of user-generated subjective links. In addition, the graph generation, navigation and modification functions may be applied to the whole collection of documents or to a subset thereof.

In a corresponding embodiment, the end-user refines and comments on the results of a search carried out by the search engine module 32. Namely, the graph 41 originally generated in the graphical user interface 40 now represents a list of the most highly ranked web pages retrieved by the search engine module 32 in response to a search query entered by the end-user. Instead of displaying the result as a list of hypertext links, the GUI 40 displays a central icon 49 for the best-ranked web page and icons disposed around it for further significant web pages. In PageRank, it is possible to compute the rank of the best-ranked page as a sum of contributions from other pages linked to it. In order to show a relatively simple graph, the choice can be made to display only icons representing web pages that make a significant contribution to the rank of the best-ranked page. The result could be displayed as shown in Figure 6. Next to an icon 45, the corresponding contribution to the rank of the best-ranked page can be displayed in percentage, e.g. 10%, 15%, and so on. To show more results, the choice can be made to display also a second line of icons further from the central icon 49 and representing web pages making a significant, yet indirect contribution to the rank of the best-ranked page by being linked to the direct contributors.

It may not be possible or desirable to modify the actual web pages and the hyperlinks therein in response to the graph modification commands of type. Indeed a search engine is generally not allowed to add hypertext links into the content of the web pages that it is indexing. Rather than modifying the web pages and hyperlinks stored in the database 21, an embodiment provides a specific portion in the database 21 to store the graph modifications, e.g. additional links, generated by the user of the GUI 40. This specific portion will be referred to as user-generated layer of the database 21. A separate user-generated layer can be provided for each user of the ranking service. The graph 41 is then generated by overlaying the different user-generated layers with the basic graph layer. In the case of PageRank, the basic graph layer corresponds to the structure of hyperlinks found on the indexed web pages, e.g. collected by web crawlers.

Linked web pages are not the only field of application of the ranking method. Link-based ranking methods adapted to heterogeneous collections of information objects of different natures is disclosed in co-pending application EP11182453 filed on 23 September 2011. In accordance with that method of ranking information objects, the collection of information objects comprises information objects of a first nature, e.g. authored papers, and information objects of a second nature, e.g. authors' profiles. The links are each associated to a link type selected among a plurality of link types, e.g. citation links between papers and authorship links between authors and papers.

The method comprises:
allocating a qualification weight to each link, the allocated weight being defined as a function of the link type associated to the link,
Selecting a plurality of paths within the collection of information objects, each path comprising a sequence of information objects linked by a corresponding sequence of the links, wherein each successive link of a path is selected randomly among the links that originate from a same information object using link selection probabilities, for each information object of the first nature, computing a score of the information object as a function of the respective contributions of the links that point to the information object, the contribution of a link being a function of the number of times the link has been selected in the path selection step and the qualification weight of the link, and
ranking the information objects of the first nature as a function of the respective scores of the information objects of the first nature.

Figures 3 to 5 illustrate an exemplary application of the graph modification functions of the GUI 40 to a scientific bibliographical database in which the above ranking method can be used. For the sake of simplicity, the information objects stored in the bibliographic database are from two natures, namely the scientific papers and the authors. Papers are represented by circular icons and authors by square icons in Figures 3 to 5. Those information objects are linked by links of three link types. Citation links 3 between papers represent the fact that a first paper cites a second paper. Numeral 4 are links that represent the fact that the paper is written by the author and will be called 'written by' links. Numeral 5 are links that represent the fact the author has written the paper and will be called 'wrote' links. The links are oriented and have a qualification weight. The citation links 3 and the 'written by' links 4 are positive links having a qualification weight equal to one. The 'wrote' links 5 are neutral and therefore have a qualification weight which is null.

Figure 3 illustrates a graph 41 corresponding to a portion of the bibliographical database as it may appear in the GUI 40. For the sake of simplicity, the connectors representing links 3, 4 and 5 are designated by the same numerals as the links themselves. A user of computer 10 may employ the graph modification functions of GUI 40 to add information to the bibliographical database. For example, the user observes that the citation link 3 should not be understood as a positive appreciation of the cited paper since the citing paper is rather expressing strong criticism against the cited paper. Therefore, the user adds a connector 6 representing a negative link in the GUI 40 between the citing paper and the cited paper. In addition or alternatively, the user adds a connector 7 representing a negative link in the GUI 40 between the author of the citing paper and the cited paper. The modified graph 141 is shown on Figure 4. Accordingly, two additional links are stored in the bibliographical database: namely a link 6 and a link 7 of type 'dislike'.

Figure 5 illustrates how the graph modification information may be stored in the database 21. A structure-based layer 25 contains the links that result from the objective structure of the bibliographical database, namely authorship links and citation links as recorded in the papers. By contrast the links resulting from the action of the user on the GUI 40 are stored in a user-generated layer 26. If the system has N different identified users, e.g. service subscribers, N corresponding user-generated layers may be provided in the database 21. For the computation of link-based ranks, the rank computation module 33 may take into account some or all of the graph layers depending on a configuration. In the example shown, the taking into account of links 6 and/or 7 in the mathematical link-based rank computation method will decrease the ranking score of the cited paper compared to the initial score. Namely, the GUI 40 has made it possible to express the subjective knowledge or appreciation of a user under a graphical form suitable for aggregation with structure-based information and automated quantitative evaluation.

In an embodiment, each subscriber can individually configure the selection of user-generated layers that are intended to be included in rank computation, e.g. layers of subscribers that are trusted. In an embodiment, a consolidated user-generated layer is constructed by aggregating the most relevant graph modifications entered by the whole community of users. The consolidated layer can then be shared by the whole community to obtain ranking results that reflect the most relevant subjective appreciations of the community members. The consolidation process may be an automated process governed by statistics, namely modifications that are repeatedly entered are considered more relevant. It may be a human controlled process governed by a human authority. It may be a collective process governed by voting or a mix of those solutions.

In the graph shown on the GUI 40, different shapes and colors may be used to improve readability and facilitate understanding of the graph. Especially, different connectors should be used for links of different link types. Different icons should be used for information objects of different natures.

Elements such as the control modules could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the indefinite article "a" or "an" preceding an element or step does not exclude the presence of a plurality of such elements or steps.

In the claims, any reference signs placed between parentheses shall not be construed as limiting the scope of the claims.

## Claims

1. A method for user-enhanced ranking of information objects, comprising:
accessing a computer-based database (21) comprising a collection of information objects interrelated by a collection of directional links,
generating a graphical user-interface (40) on a display (13), the graphical user-interface comprising a graph (41), wherein the graph comprises a plurality of icons each representing an information object of the collection of information objects and a plurality of connectors (3, 4, 5; 46) connecting the icons, each connector representing at least one link of the collection of links,
modifying the graph by generating an additional connector (6, 7; 47) between the icons in response to graph modification commands received from a user-controlled interaction means,
storing an additional link in the database (21) as a function of the additional connector, wherein the additional link interrelates information objects represented by the icons connected by the additional connector,
computing a link-based rank for an information object of the collection of information objects as a function of the additional link and the collection of links.

2. A method in accordance with claim 1, wherein the database (21) comprises a structure-based layer (25) and a user-generated layer (26), wherein the additional link is stored in the user-generated layer.

3. A method in accordance with claim 2, further comprising storing links generated by a plurality of users in the user-generated layer (26).

4. A method in accordance with claim 3, further comprising selecting a subset of the links (6, 7) stored in the user-generated layer (26), wherein the link-based rank is computed as a function of the selected subset of the links stored in the user-generated layer.

5. A method in accordance with claim 4, wherein the subset of the links is selected as a function of one of a vote by the plurality of users, an administrator's decision and a link repetition measurement.

6. A method in accordance with any one of claims 2 to 5, wherein the structure-based layer stores information objects and links obtained by crawling web sites, wherein the information objects stored in the structure-based layer represent documents found on the web sites, wherein the links stored in the structure-based layer represent hypertext links between the documents.

7. A method in accordance with any one of claims 2 to 5, wherein the structure-based layer (25) stores information objects and links representing a bibliographical index, wherein the information objects comprise documents and authors' profiles, wherein the links comprise citation links (3) that interrelate documents and authorship links (4, 5) that interrelate authors' profiles with documents.

8. A method in accordance with any one of claims 1 to 7, wherein the additional link comprises a positive link, wherein the link-based rank computation takes into account the positive link so as to increase the link-based rank of the information object pointed to by the positive link.

9. A method in accordance with any one of claims 1 to 7, wherein the additional link comprises a negative link, wherein the link-based rank computation takes into account the negative link so as to decrease the link-based rank of the information object pointed to by the negative link.

10. A method in accordance with any one of claims 1 to 9, further comprising:
receiving a search query, and
retrieving information objects that match the search query from the collection of information objects, wherein the icons of the graph only represent information objects that match the search query.

11. A method in accordance with claim 10, further comprising:
computing link-based ranks for the information objects that match the search query, wherein the generated graph comprises an icon (49) representing a best-ranked information object in a central portion of the graph.

12. A method in accordance with claim 11, wherein the generated graph comprises further icons representing further information objects having a lower rank than the best-ranked information object, wherein the further icons are disposed around the central portion of the graph.

13. A computer program comprising computer-executable instructions that perform the method in accordance with any one of claims 1 to 12 when executed.

14. A computer system (10, 20) for user-enhanced ranking of information objects, comprising:
a computer-based database (21) comprising a collection of information objects interrelated by a collection of directional links,
a display (13),
a control module (35) adapted to generate a graphical user-interface (40) on the display, the graphical user-interface comprising a graph (41), wherein the graph comprises a plurality of icons each representing an information object of the collection of information objects and a plurality of connectors connecting the icons, each connector representing at least one link of the collection of links,
a user-controlled interaction means (11, 12, 13) adapted to send graph modification commands to the control module, the control module (35) being adapted to modify the graph by generating an additional connector between the icons in response to the graph modification commands and to store an additional link (6, 7; 47) in the database as a function of the additional connector, wherein the additional link interrelates information objects represented by the icons connected by the additional connector,
and a rank computation module (33) adapted to compute a link-based rank for an information object of the collection of information objects as a function of the additional link and the collection of links.

15. A system in accordance with claim 14, wherein the user-controlled interaction means (11, 12, 13) is further adapted to send graph navigation commands to the control module (35), the control module being adapted to display a different view of the graph in response to the graph navigation commands.

## Amended claims

### Amended claims in accordance with Rule 137(2) EPC.

**1.** A method for user-enhanced ranking of information objects, comprising:
accessing a computer-based database (21) comprising a collection of information objects interrelated by a collection of directional links, wherein the database (21) comprises a structure-based layer (25) and a user-generated layer (26), wherein the structure-based layer (25) contains links that result from an objective structure of the information objects, generating a graphical user-interface (40) on a display (13), the graphical user-interface comprising a graph (41), wherein the graph comprises a plurality of icons each representing an information object of the collection of information objects and a plurality of connectors (3, 4, 5; 46) connecting the icons, each connector representing at least one link of the collection of links,
modifying the graph by generating an additional connector (6, 7; 47) between the icons in response to graph modification commands received from a user-controlled interaction means,
storing an additional link in the database (21) as a function of the additional connector, wherein the additional link interrelates information objects represented by the icons connected by the additional connector, wherein the additional link is stored in the user-generated layer,
computing a link-based rank for an information object of the collection of information objects as a function of the additional link stored in the user-generated layer and the collection of links including the links that result from the objective structure of the information objects.

**2.** A method in accordance with claim 1, further comprising storing links generated by a plurality of users in the user-generated layer (26).

**3.** A method in accordance with claim 2, further comprising selecting a subset of the links (6, 7) stored in the user-generated layer (26), wherein the link-based rank is computed as a function of the selected subset of the links stored in the user-generated layer.

**4.** A method in accordance with claim 3, wherein the subset of the links is selected as a function of one of a vote by the plurality of users, an administrator's decision and a link repetition measurement.

**5.** A method in accordance with any one of claims 1 to 4, wherein the structure-based layer stores information objects and links obtained by crawling web sites, wherein the information objects stored in the structure-based layer represent documents found on the web sites, wherein the links stored in the structure-based layer represent hypertext links between the documents.

**6.** A method in accordance with any one of claims 1 to 4, wherein the structure-based layer (25) stores information obj ects and links representing a bibliographical index, wherein the information objects comprise documents and authors' profiles, wherein the links stored in the structure-based layer comprise citation links (3) that interrelate documents and authorship links (4, 5) that interrelate authors' profiles with documents.

**7.** A method in accordance with any one of claims 1 to 6, wherein the additional link comprises a positive link, wherein the link-based rank computation takes into account the positive link so as to increase the link-based rank of the information object pointed to by the positive link;

**8.** A method in accordance with any one of claims 1 to 6, wherein the additional link comprises a negative link, wherein the link-based rank computation takes into account the negative link so as to decrease the link-based rank of the information object pointed to by the negative link.

**9.** A method in accordance with any one of claims 1 to 8, further comprising:
receiving a search query, and
retrieving information objects that match the search query from the collection of information objects, wherein the icons of the graph only represent information objects that match the search query.

**10.** A method in accordance with claim 9, further comprising:
computing link-based ranks for the information objects that match the search query, wherein
the generated graph comprises an icon (49) representing a best-ranked information object in a central portion of the graph.

**11.** A method in accordance with claim 10, wherein the generated graph comprises further icons representing further information objects having a lower rank than the best-ranked information object, wherein the further icons are disposed around the central portion of the graph.

**12.** A computer program comprising computer-executable instructions that perform the method in accordance with any one of claims 1 to 11 when executed.

**13.** A computer system (10, 20) for user-enhanced ranking of information obj ects, comprising:
a computer-based database (21) comprising a collection of information objects interrelated by a collection of directional links, wherein the database (21) comprises a structure-based layer (25) and a user-generated layer (26), wherein the structure-based layer (25) contains links that result from an objective structure of the information objects,
a display (13),
a control module (35) adapted to generate a graphical user-interface (40) on the display, the graphical user-interface comprising a graph (41), wherein the graph comprises a plurality of icons each representing an information object of the collection of information objects and a plurality of connectors connecting the icons, each connector representing at least one link of the collection of links,
a user-controlled interaction means (11, 12, 13) adapted to send graph modification commands to the control module, the control module (35) being adapted to modify the graph by generating an additional connector between the icons in response to the graph modification commands and to store an additional link (6, 7; 47) in the user-generated layer (26) of the database as a function of the additional connector, wherein the additional link interrelates information objects represented by the icons connected by the additional connector,
and a rank computation module (33) adapted to compute a link-based rank for an information object of the collection of information objects as a function of the additional link stored in the user-generated layer and the collection of links including the links that result from the objective structure of the information objects.

**14.** A system in accordance with claim 13, wherein the user-controlled interaction means (11, 12, 13) is further adapted to send graph navigation commands to the control module (35), the control module being adapted to display a different view of the graph in response to the graph navigation commands.
